Europäisches Patentamt

European Patent Office

Office européen des brevets

(11) Veröffentlichungsnummer : **0 071 259**
**B1**

(12) **EUROPÄISCHE PATENTSCHRIFT**

(45) Veröffentlichungstag der Patentschrift :
06.05.87

(51) Int. Cl.⁴ : **B 01 D 25/12**, B 01 D 37/02

(21) Anmeldenummer : 82106831.9

(22) Anmeldetag : 28.07.82

(54) **Verfahren zum Aufbringen einer Filterhilfs- oder Precoatschicht in einer Plattenfilterpresse, sowie Plattenfilterpresse zur Durchführung des Verfahrens.**

(30) Priorität : 28.07.81 DE 3129736

(43) Veröffentlichungstag der Anmeldung :
09.02.83 Patentblatt 83/06

(45) Bekanntmachung des Hinweises auf die Patenterteilung : 06.05.87 Patentblatt 87/19

(84) Benannte Vertragsstaaten :
**CH DE FR GB IT LI**

(56) Entgegenhaltungen :
FR-A- 422 861
FR-A- 1 014 693
FR-A- 1 500 285

(73) Patentinhaber : **Passavant-Werke AG & Co. KG**

**D-6209 Aarbergen 7 (DE)**
**CH DE FR IT LI**
**U. Passavant AG Michelbacher Hütte**

**D-6209 Aarbergen 7 (DE)**
**GB**

(72) Erfinder : **Busse, Oswald, Dr.**
**Schillerstrasse 8**
**D-6209 Aarbergen 2 (DE)**
Erfinder : **Klesper, Hugo**
**Auf dem Kirchgarten**
**D-6209 Aarbergen 2 (DE)**

(74) Vertreter : **Glawe, Delfs, Moll & Partner Patentanwälte**
**Postfach 26 01 62 Liebherrstrasse 20**
**D-8000 München 26 (DE)**

## Beschreibung

Es ist bekannt, daß beim Filtrieren von Schlämmen in Plattenfilterpressen die Ablösung des Filterkuchens vom Filtertuch bei verschiedenen Schlammarten Schwierigkeiten bereitet. Zu diesen Schlammarten zählen beispielsweise die Filterkuchen von Waschbergen in der Kohleproduktion, Filterkuchen aus mit polymeren Flockungsmitteln geflockten Schlämmen u. dgl... Durch die Kuchenhaftung wird unangenehme manuelle Tätigkeit notwendig, die unerwünscht und unrationell ist.

Um die Kuchenhaftung am Filtertuch soweit zu reduzieren, daß der Kuchenabfall selbsttätig und rückstandslos erfolgt, ist es notwendig, Precoat-Schichten auf die Filtertücher aufzubringen. Dies geschieht in der Weise, daß nach dem Schließen der Filterpresse vor der eigentlichen Filtrationscharge eine Suspension eines Precoatmittels oder auch eines gerüstbildenden Filterhilfsmittels den Kammern der Filterpresse zugeführt und das durch die Filtertücher hindurchtretende Filtrat abgezogen wird, so daß sich das Precoatmittel auf den Filtertüchern niederschlägt.

Es hat sich jedoch gezeigt, daß es vor allem bei Großfilterpressen, z. B. mit einer Filterplattengröße von 1,5 × 1,5 m und z. B. mehr als 50 Filterplatten, außerordentlich schwierig ist, die Precoat-Schicht über die gesamte Filterfläche gleichmäßig zu verteilen und sicherzustellen, daß insbesondere in den oberen Bereichen der Filtertücher eine Precoat-Schicht überhaupt aufgebracht wird. Insbesondere bei Filterpressen größerer Länge wird in deren mittlerer Bereich eine ungenügende Aufbringung von Precoat-Schicht beobachtet, auch wenn die Beaufschlagung mit der Precoat-Suspension von beiden Enden der Filterpresse her vorgenommen wird.

Wenn in solchen Fällen versucht wird, die Zuführung der Precoat-Suspension solange fortzusetzen, bis sich auch im mittleren Teil der Filterpresse eine ausreichende Precoat-Schicht auch in den oberen Bereichen der Filtertücher abgesetzt hat, so wird hierfür eine sehr große Flüssigkeitsmenge und eine sehr lange Zeit für das Anschwemmen der Precoat-Schicht benötigt, und während dieser Zeit wird sich in den unteren Bereichen der Filtertücher und insbesondere in den Endabschnitten der Filterpresse eine stärkere Precoat-Schicht abgesetzt haben, als es für die Beseitigung der Filterkuchenhaftung erforderlich ist. Der Precoatverbrauch ist daher unnötig hoch und der Filterwiderstand der zu stark mit Precoat beschichteten Filtertücher wird unnötig erhöht.

Der Erfindung liegt die Aufgabe zugrunde, ein Verfahren und die zu seiner Durchführung erforderlichen Vorrichtungsmittel anzugeben, mit denen auch bei großen Filterpressen eine über die Länge und Höhe der Filterpresse sehr gleichmäßige Aufbringung einer Precoat- oder Filterhilfsmittelschicht in kurzer Zeit und mit möglichst geringem Suspensionsverbrauch möglich ist.

Die erfindungsgemäße Lösung der Aufgabe sowie vorteilhafte Ausgestaltungen sind in den Patentansprüchen angegeben.

Durch die Schaffung von mindestens einer, vorzugsweise mehreren gleichmäßig verteilten Filtratabzugsstellen an von den Enden der Filterpresse entfernten Stellen wird in vorteilhafter Weise verhindert, daß das Trägermedium der Precoat-Suspension zum überwiegenden Teil auf einem Kurzschlußweg nur durch die äußeren Kammern der Filterpresse strömt und deren Filtertücher beschichtet, während die näher zur Mitte gelegenen Filterkammern ungenügend durchströmt werden und Luft in ihnen eingeschlossen bleibt. Vielmehr bewirken die zusätzlichen Filtratabzugsstellen, daß ein erheblicher Teil der Precoat-Suspension ihren Weg zwangsweise auch durch die in der Mitte gelegenen Filterkammern nehmen muß, so daß dort keine Luft eingeschlossen bleiben kann und eine bevorzugte Beschichtung der Filtertücher nur in den äußeren Filterkammern vermieden wird.

Durch die bevorzugte Bemessung der zusätzlichen Filtratabzugsstellen derart, daß ihr Gesamtquerschnitt kleiner als der Zuführungsquerschnitt ist und dadurch ein Druckaufbau in den Filterkammern bewirkt wird, wird eine besonders gleichmäßige Verteilung der Precoat-Schicht auf den Filtertüchern erzielt, wie praktische Versuche gezeigt haben.

Die erfindungsgemäßen zusätzlichen Filtratabzugsstellen können an jeder Filterplatte vorgesehen sein, jedoch haben Versuche ergeben, daß es genügt, wenn nur z. B. jede dritte oder sogar nur jede zehnte Filterplatte mit einer solchen zusätzlichen Filtratabzugsöffnung versehen ist.

Eine Ausführungsform der Erfindung wird anhand der Zeichnungen näher erläutert.

Figuren 1 und 2 zeigen schematisch eine Frontansicht bzw. einen Längsschnitt einer Filterplatte für eine Plattenfilterpresse gemäß einer Ausführungsform der Erfindung.

Figur 3 zeigt eine schematische Seitenansicht eines Teils der erfindungsgemäß ausgebildeten Plattenfilterpresse.

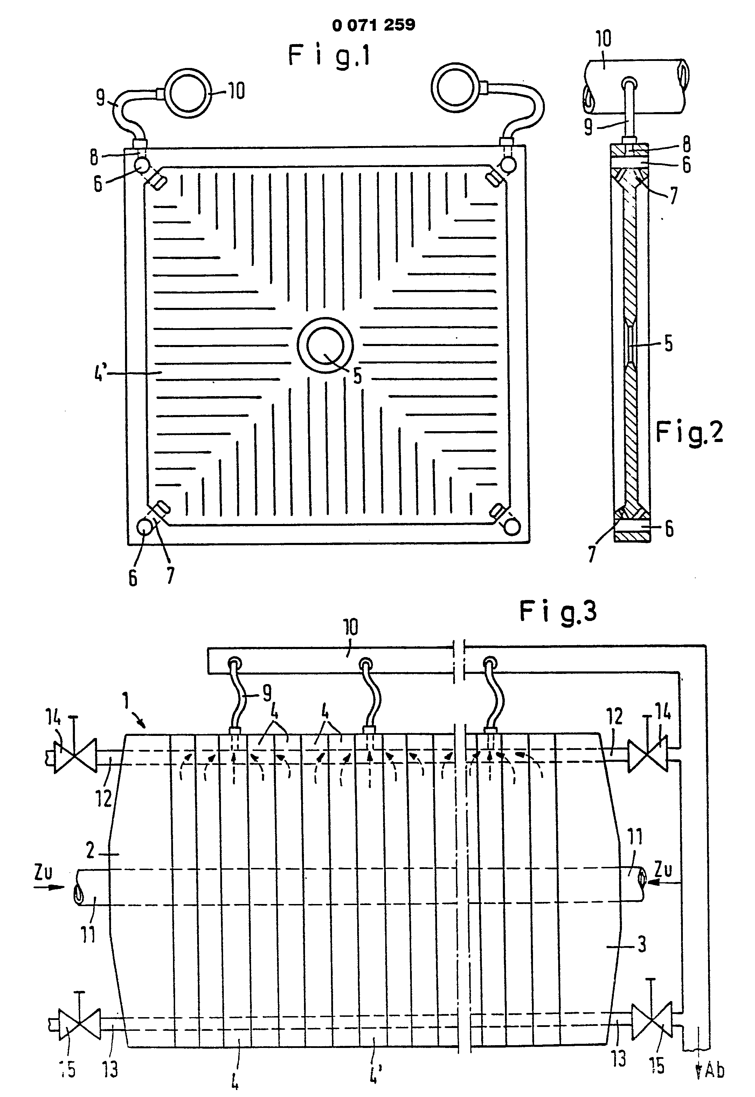

Die in Fig. 3 gezeigte Plattenfilterpresse 1 besteht aus zwei Endstücken 2, 3 und einer Vielzahl von dazwischen angeordneten Filterplatten 4,4'. Eine Filterplatte 4 ist in Fig. 1 und 2 dargestellt. Sie weist eine zentrale Bohrung 5 sowie an den Ecken angeordnete Bohrungen 6 auf, zu denen Filtratkanäle 7 führen. Von den Bohrungen 6 in den oberen Ecken zweigt je eine zusätzliche Filtratabzugsöffnung 8 ab, die über einen flexiblen Schlauch 9 mit einer Filtratsammelleitung 10 verbunden ist. Zwischen den gemäß Fig. 1 und 2 ausgebildeten Filterplatten 4 befinden sich in der Filterpresse 1 eine Anzahl von Filterplatten 4, die nur die zentrale Öffnung 5 sowie die Bohrungen 6 an den Ecken, aber keine zusätzlichen Filtratabzugsöffnungen 8 mit Schlauchleitungen 9 aufweisen.

Bei geschlossener Filterpresse bilden die miteinander fluchtenden zentralen Öffnungen 5 den Zuführungskanal, dem von beiden Enden her über Zuleitungen 11, z. B. mittels Pumpen, die zu filtrierende Suspension zugeführt wird. Auf dem gleichen Wege wird vor jeder Filtrationscharge eine Suspension mit Precoat- oder Filterhilfsmittel zugeführt. Die Bohrungen 6 in den Ecken der Filterplatten ergänzen sich zu durchgehenden Filtratabzugskanälen, an die ebenfalls an beiden Enden der Filterpresse untere und obere Abzugsleitungen 12, 13 mit entsprechenden Absperrorganen 14, 15 angeschlossen sind. Auf diesem Wege wird während der Filtration das Filtrat abgezogen. Alle Abzugsleitungen 12, 13 sowie die an die zusätzlichen Filtratabzugsöffnungen 8 der Filterplatten 4 angeschlossenen Filtratsammelleitungen 10 sind an einen gemeinsamen Abfluß angeschlossen.

Wenn vor der eigentlichen Filtration die Precoat-Schicht auf die (nicht dargestellten) Filtertücher, mit denen die Filterplatten bespannt sind, aufgebracht werden soll, so werden die Absperrorgane 14, 15 geschlossen. Sodann wird eine Suspension der Precoat-Schicht durch die Zuleitungen 11 zugeführt und füllt die Kammern der Filterpresse allmählich an, wobei die Luft über die Schlauchleitungen 9 und Sammelleitungen 10 ausströmen kann. Das Filtrat dieser Precoat-Suspension kann nicht über die normalen Filtratabflußleitungen 12, 13 abfließen, da die Absperrorgane 14, 15 geschlossen sind, sondern wird erst, wenn die Kammern der Filterpresse im wesentlichen vollständig gefüllt sind, über die Schlauchleitungen 9 und Sammelleitungen 10, und zwar gleichmäßig über die Länge der Filterpresse verteilt, abgezogen. Die zusätzlichen Filtratabzugsöffnungen 8 oder die flexiblen Schlauchleitungen 9 sind so bemessen, daß der gesamte Querschnitt dieser zusätzlichen Filtratabzugsstellen kleiner ist als der gesamte Zuführungsquerschnitt und auch kleiner als der gesamte Querschnitt der bei Precoatieren durch die Absperrorgane 14, 15 abgeschlossenen normalen Filtratabzugsleitungen 12, 13. Auf diese Weise wird während der Precoataufbringung der Aufbau eines leichten Überdruckes in den Kammern der Filterpresse sichergestellt. Es ist auch möglich, in einer späteren Phase der Aufbringung der Precoat-Schicht die Absperrorgane 14 der oberen Filtratabzugsleitungen 12 geringfügig zu öffnen und hier zusätzlich Filtrat gedrosselt abzuziehen, wobei aber sichergestellt bleiben muß, daß die über die Leitungen 12 und die Schlauchleitungen 9 abgezogene Filtratmenge insgesamt kleiner ist als die pro Zeiteinheit zuströmende Suspensionsmenge.

Vorteilhaft ist es auch, wenn vor der Zuführung der Precoat-Suspension reines Wasser oder Filtrat der Filterpresse zugeführt wird, um die Kammern der Filterpresse vorweg zu füllen. Diese Füllung wird anschließend durch die zugeführte Precoat-Suspension verdrängt.

**Patentansprüche**

1. Verfahren zum Aufbringen einer Filterhilfs- oder Precoat-Schicht auf die Filtertücher einer Plattenfilterpresse (1), die über die Länge der Filterpresse durchgehende Filtratabzugskanäle (6, 12, 13) aufweist, durch Zuführen einer das Filterhilfs- oder Precoatmittel enthaltenden Suspension von einem oder beiden Enden der Filterpresse (1) her in die Kammern der Filterpresse und Abziehen des durch die Filtertücher durchtretenden Trägermediums aus der Filterpresse, dadurch gekennzeichnet, daß mindestens ein Teil des Trägermediums an einer oder mehreren zwischen den Enden der Filterpresse liegenden Abzugsstellen (8, 9) aus der Filterpresse (1) abgezogen wird, wobei mindestens zu Beginn des Aufbringens der Filterhilfs- oder Precoat-Schicht das Trägermedium ausschließlich an der oder den zwischen den Enden der Filterpresse liegenden Abzugsstellen abgezogen wird und dabei die Filtratabzugskanäle (6, 12, 13) geschlossen gehalten werden.

2. Verfahren nach Anspruch 1, dadurch gekennzeichnet, daß das Trägermedium an einer Mehrzahl von über die Länge der Filterpresse (1) verteilten Abzugsstellen (8, 9) abgezogen wird.

3. Verfahren nach Anspruch 1 oder 2, dadurch gekennzeichnet, daß durch gedrosseltes Abziehen des Trägermediums ein Druck in den Filterkammern aufgebaut wird.

4. Verfahren nach einem der Ansprüche 1 bis 3, dadurch gekennzeichnet, daß im weiteren Verlauf des Aufbringens der Filterhilfs- oder Precoatschicht die Filtratabzugskanäle (6, 12, 13) geöffnet und das Trägermedium zusätzlich auch über die durchgehenden Filtratabzugskanäle an den Enden der Filterpresse abgezogen wird.

5. Verfahren nach einem der Ansprüche 1 bis 4, dadurch gekennzeichnet, daß die Kammern der Filterpresse vor dem Zuführen der Suspension des Filterhilfs- oder Precoatmittels ganz oder teilweise mit Flüssigkeit gefüllt werden.

6. Plattenfilterpresse zur Durchführung des Verfahrens nach einem der Ansprüche 1 bis 4, wobei jede Filterplatte (4) mindestens eine insbesondere zentrale Zulaufbohrung (5) und eine oder mehrere, insbesondere in den Eckbereichen angeordnete Ablaufbohrungen (6) aufweist und die Bohrungen (5, 6) aller Filterplatten (4) sich bei geschlossener Filterpresse zu durchgehenden Zuführ- bzw. Filtratabzugskanälen ergänzen, an die an jeweils einem oder beiden Enden der Filterpresse eine Suspensionszuführung (11) bzw. Filtratabzugsleitungen (12, 13) mit Absperrorganen (14) angeschlossen sind, dadurch gekennzeichnet, daß mindestens eine entfernt von den Enden (2, 3) der Filterpresse (1) angeordnete Filterplatte (4') mindestens eine zusätzliche, direkt nach außen führende Abzugsöffnung (8) aufweist.

7. Plattenfilterpresse nach Anspruch 6, dadurch gekennzeichnet, daß mehrere über die Länge der Filterpresse (1) verteilt angeordnete Filterplatten (4') mit zusätzlichen Abzugsöffnungen (8) vorgesehen sind.

8. Plattenfilterpresse nach Anspruch 6 oder 7, dadurch gekennzeichnet, daß die zusätzlichen Abzugsöffnungen (8) in den oberen Ecken der Filterplatten (4') angeordnet sind.

9. Plattenfilterpresse nach einem der Ansprüche 6 bis 8, dadurch gekennzeichnet, daß die zusätzlichen Abzugsöffnungen (8) über flexible Schläuche (9) an eine oder mehrere Sammelleitungen (10) angeschlossen sind.

10. Plattenfilterpresse nach einem der Ansprüche 1 bis 9, dadurch gekennzeichnet, daß die zusätzlichen Abzugsöffnungen (8) von den einen durchgehenden Filtratabzugskanal bildenden Filtratabzugsbohrungen (6) der Filterplatten (4') abzweigen.

11. Plattenfilterpresse nach einem der Ansprüche 1 bis 10, dadurch gekennzeichnet, daß der Durchtrittsquerschnitt aller zusätzlichen Abzugsöffnungen (8) zusammen kleiner als der Durchtrittsquerschnitt der beim Filtrieren in Betrieb befindlichen Filtratabzugskanäle (6, 12, 13) und kleiner als der Durchtrittsquerschnitt der Zulaufkanäle (5, 11) ist.

**Claims**

1. Method of applying an auxiliary filtration layer or precoat layer onto the filter cloths of a plate filter press (1), which exhibits filtrate drainage channels (6, 12, 13) continuous along the length of the filter press, by feeding a suspension containing the auxiliary filtration medium or precoat medium from one or both ends of the filter press (1) into the chambers of the filter press and draining the carrier medium which passes through the filter cloths out of the filter press, characterised in that at least a part of the carrier medium is drained out of the filter press (1) at one or more drainage points (8, 9) located between the ends of the filter press, whilst, at least at the commencement of the application of the auxiliary filtration layer or precoat layer, the carrier medium is drained exclusively at the drainage point or points located between the ends of the filter press and the filtrate drainage channels (6, 12, 13) are then kept closed.

2. Method according to Claim 1, characterised in that the carrier medium is drained at a plurality of drainage points (8, 9) distributed along the length of the filter press (1).

3. Method according to Claim 1 or 2, characterised in that a pressure is built up in the filter chambers by throttled drainage of the carrier medium.

4. Method according to any of Claims 1 to 3, characterised in that, in the further course of the application of the auxiliary filtration layer or precoat layer, the filtrate drainage channels (6, 12, 13) are opened and the carrier medium is also drained additionally at the ends of the filter press through the continuous filtrate drainage channels.

5. Method according to any of Claims 1 to 4, characterised in that the chambers of the filter press are filled totally or partially with liquid before the suspension of the auxiliary filtration medium or precoat medium is fed.

6. Plate filter press for performing the method according to any of Claims 1 to 4, wherein each filter plate (4) exhibits at least one particularly central inlet bore (5) and one or more outlet bores (6) particularly arranged in the corner regions, and when the filter press to closed the bores (5, 6) of all the filter plates (4) complement each other to form continuous feed channels and/or filtrate drainage channels, to which a suspension feed pipe (11) and/or filtrate drainage pipes (12, 13) with shut-off elements (14) are connected in each case at one end or both ends of the filter press, characterised in that at least one filter plate (4') arranged distant from the ends (2, 3) of the filter press (1) exhibits at least one additional drainage orifice (8) leading directly to the outside.

7. Plate filter press according to Claim 6, characterised in that a plurality of filter plates (4') arranged distributed along the length of the filter press (1) are provided with additional drainage orifices (8).

8. Plate filter press according to Claim 6 or 7, characterised in that the additional drainage orifices (8) are arranged in the top corners of the filter plates (4').

9. Plate filter press according to any of Claims 6 to 8, characterised in that the additional drainage orifices (8) are connected by flexible hoses (9) to one or more collecting pipes (10).

10. Plate filter press according to any of Claims 1 to 9, characterised in that the additional drainage orifices (8) branch from the filtrate drainage bores (6) of the filter plates (4') which form a continuous filtrate drainage channel.

11. Plate filter press according to any of Claims 1 to 10, characterised in that the passage cross-section of all the additional drainage orifices (8) together is smaller than the passage cross-section of the filtrate drainage channels (6, 12, 13) which are in service during filtration and smaller than the passage cross-section of the inlet channels (5, 11).

**Revendications**

1. Procédé de formation d'une couche d'adjuvant de filtration ou de pré-revêtement sur les tissus filtrants d'un filtre-presse à plaques (1) qui comporte des canaux d'écoulement du filtrat (6, 12, 13) de bout en bout sur la longueur du filtre-presse, par introduction d'une suspension contenant l'adjuvant de filtration ou l'agent de pré-revêtement, par l'une ou l'une et l'autre des extrémités du filtre-presse (1), dans les chambres du filtre-presse et par extraction du véhicule traversant les tissus filtrants hors du filtre-presse, caractérisé en ce qu'une partie au moins du véhicule est extraite du filtre-presse (1) en un ou plusieurs points d'extraction (8, 9) situés entre les extrémités du filtre-presse, le véhicule étant, au moins au début de la formation de la couche d'adjuvant de filtration ou de pré-revêtement, extrait exclusivement au point ou aux points d'extraction situés entre les extrémités du filtre-presse et les canaux d'écoulement du filtrat (6, 12, 13) étant alors maintenus fermés.

2. Procédé selon la revendication 1, caractérisé en ce que le véhicule est extrait en une multiplicité de points d'extraction (8, 9) répartis sur toute la longueur du filtre-presse (1).

3. Procédé selon la revendication 1 ou 2, caractérisé en ce qu'une pression est créée dans les chambres du filtre par extraction étranglée du véhicule.

4. Procédé selon l'une quelconque des revendications 1 à 3, caractérisé en ce qu'au cours du déroulement ultérieur de la formation de la couche d'adjuvant de filtration ou d'agent de pré-revêtement, les canaux d'écoulement du filtrat (6, 12, 13) sont ouverts et le véhicule est extrait en plus aux extrémités du filtre-presse, au moyen des canaux continus d'écoulement du filtrat.

5. Procédé selon l'une quelconque des revendications 1 à 4, caractérisé en ce qu'avant l'introduction de la suspension de l'adjuvant de filtration ou de l'agent de pré-revêtement, les chambres du filtre-presse sont remplies complètement ou partiellement de liquide.

6. Filtre-presse à plaques pour la mise en œuvre du procédé selon l'une quelconque des revendications 1 à 4, chaque plaque filtrante (4) comportant au moins une forure d'admission (5), en particulier centrale, et une ou plusieurs forures d'écoulement (6) disposées en particulier dans les régions d'angle, et les forures (5, 6) de toutes les plaques de filtration (4) formant conjointement, lorsque le filtre-presse est fermé, des canaux continus d'admission et, respectivement, d'écoulement du filtrat auxquels sont raccordées avec des organes d'arrêt (14), à une extrémité respective ou aux deux extrémités du filtre-presse, une conduite d'alimentation en suspension (11) et des conduites d'écoulement du filtrat (12, 13), caractérisé en ce qu'au moins une plaque filtrante (4'), disposée à distance des extrémités (2, 3) du filtre-presse (1), comporte au moins un orifice d'extraction supplémentaire (8) qui aboutit directement à l'extérieur.

7. Filtre-presse à plaques selon la revendication 6, caractérisé en ce que plusieurs plaques filtrantes (4), réparties sur la longueur du filtre-presse (1), sont munies d'orifices d'extraction supplémentaires (8).

8. Filtre-presse à plaques selon la revendication 6 ou 7, caractérisé en ce que les orifices d'extraction supplémentaires (8) sont disposés dans les angles supérieurs des plaques filtrantes (4').

9. Filtre-presse à plaques selon l'une quelconque des revendications 6 à 8, caractérisé en ce que les orifices d'extraction supplémentaires (8) sont raccordés par les tuyaux flexibles (9) à une ou plusieurs conduites collectrices (10).

10. Filtre-presse à plaques selon l'une quelconque des revendications 6 à 9, caractérisé en ce que les orifices d'extraction supplémentaires (8) naissent des forures d'écoulement du filtrat (6) prévues dans les plaques filtrantes (4') pour former un canal continu d'écoulement du filtrat.

11. Filtre-presse à plaques selon l'une quelconque des revendications 6 à 10, caractérisé en ce que la section de passage de tous les orifices d'extraction supplémentaires (8) est au total plus petite que la section de passage des canaux d'écoulement du filtrat (6, 12, 13) qui sont en fonctionnement lors de la filtration, et plus petite que la section de passage des canaux d'admission (5, 11).

0 071 259

Fig.1

Fig.2

Fig.3